(19) 

Europäisches
Patentamt
European
Patent Office
Office européen
des brevets

(11) **EP 3 647 283 A1**

(12) **EUROPEAN PATENT APPLICATION**

(43) Date of publication:
06.05.2020  Bulletin 2020/19

(21) Application number: **19198543.1**

(22) Date of filing: **20.09.2019**

(51) Int Cl.:
*C03C 3/066* (2006.01)          *C03C 3/068* (2006.01)
*C03C 3/14* (2006.01)          *C03C 3/19* (2006.01)
*B24B 1/00* (2006.01)          *C03C 3/062* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.10.2018  PCT/JP2018/040581**

(71) Applicant: **AGC INC.
Chiyoda-ku,
Tokyo 1008405 (JP)**

(72) Inventors:
• TAKESHITA, Nobuhiko
  Tokyo, 100-8405 (JP)
• ARITA, Yusuke
  Tokyo, 100-8405 (JP)
• SUGURO, Akio
  Tokyo, 100-8405 (JP)

(74) Representative: **Müller-Boré & Partner
Patentanwälte PartG mbB
Friedenheimer Brücke 21
80639 München (DE)**

(54) **OPTICAL MATERIAL FOR LIGHT GUIDE PLATES AND LIGHT GUIDE PLATE**

(57)    An optical material for a light guide plate has a refractive index of 1.70 or more, a thickness of 1.1 mm or less, and a waviness of a surface of less than $50 \times 10^{-4}$ degrees. The optical material may have the waviness of from $1.0 \times 10^{-4}$ to $10 \times 10^{-4}$ degrees. The optical material may contain glass.

EP 3 647 283 A1

**Description**

TECHNICAL FIELD

The present invention relates to an optical material to be used for light guide plates.

BACKGROUND ART

In recent years, head mount displays (HMDs) being applicable for AR, VR, MR, etc. have come to attract attention. It is common to use large refractive index materials such as glass, resins, etc. for a light guide plate constituting these optical devices.

Various studies have been made for light guide plates having superior light guiding characteristics. For example, it is common to control the total thickness deviation (TTV) of a light guide plate to solve a hue problem called a rainbow effect, and it is common to control a root mean square roughness (Rq) of a light guide plate for preventing luminance reduction due to light scattering (Patent literatures 1 to 3).

CITATION LIST

PATENT LITERATURE

Patent literature 1: WO 2018/135193 A1
Patent literature 2: WO 2016/181812 A1
Patent literature 3: WO 2017/086322 A1

SUMMARY OF INVENTION

TECHNICAL PROBLEM

However, in recent years, due to increase in the performance required for products, no optical material having light guiding characteristics capable of attaining satisfactory weight reduction, size reduction, and a long optical path has been realized. More specifically, there has been a problem that, even when TTV and Rq are set within proper ranges, an occurrence of deviation of reflection angles that disables reflection of light to a desired position cannot be prevented.

In these circumstances, it is desired to provide an optical material that has superior light guiding characteristics with reduced reflection angle deviation and hence is suitable for miniaturization of a light guide plate and elongation of an optical path of the light guide plate.

SOLUTION TO PROBLEM

The present inventors have found that the above problem can be solved by an optical material having a particular refractive index, thickness, and surface undulation shape.

That is, the present invention provides an optical material for a light guide plate, having a refractive index of 1.70 or more, a thickness of 1.1 mm or less, and a waviness of less than $50 \times 10^{-4}$ degrees.

ADVANTAGEOUS EFFECTS OF INVENTION

According to the present invention, a high-performance light guide plate capable of reducing deviation of reflection angles in the light guide plate and being made thin can be manufactured.

BRIEF DESCRIPTION OF DRAWINGS

FIG. 1 shows data obtained by measuring a surface state of an optical material for light guide plates in Example 1.
FIG. 2 is an explanatory diagram for describing a waviness measurement.
FIG. 3 is a simplified schematic diagram illustrating a simulation for evaluation of light guiding characteristics.

DESCRIPTION OF EMBODIMENTS

An optical material according to the present invention will be described.

[Composition of optical material]

There is no limitation on the composition of the optical material according to the present invention as long as its refractive index n is 1.70 or more. The refractive index is preferably 1.75 or more, more preferably 1.78 or more, particularly preferably 1.85 or more.

As the refractive index increase, the critical angle $\theta c$ of a light guide plate using the optical material decreases and the degree of freedom of designing an optical device is increased. A composition of the optical material is mainly made of a large refractive index material, and can be made of a resin or glass.

Preferable specific examples of the resin include a cycloolefin polymer, a cycloolefin copolymer, an acrylic resin, a methacrylic resin, a polycarbonate resin, a polystyrene resin, and an AS resin.

A specific example of the glass may be a composition having a refractive index of 1.70 or more that is disclosed in WO 2017/090645 A1. However, the composition of the glass is not limited to it.

Preferable specific examples of the glass include a composition containing, as represented by mol% based on oxides:

$SiO_2$: 0% to 70%;
$B_2O_3$: 0% to 50%;
MgO: 0% to 25%;
CaO: 0% to 25%;
SrO: 0% to 25%;
BaO: 0% to 35%;
$Li_2O$: 0% to 35%;
$Na_2O$: 0% to 35%;
$K_2O$: 0% to 35%;
$Al_2O_3$: 0% to 10%;
$Y_2O_3$: 0% to 10%;
$TiO_2$: 0% to 50%;
$WO_3$: 0% to 20%;
$Nb_2O_5$: 0% to 35%;
$La_2O_3$: 0% to 50%;
$ZrO_2$: 0% to 20%;
ZnO: 0% to 35%;
$Gd_2O_3$: 0% to 30%; and
$Sb_2O_3 + SnO_2$: 0% to 10%.

Particularly preferable specific examples of the glass include a composition containing, as represented by mol% based on oxides:

$SiO_2$: 5% to 35%;
$B_2O_3$: 5% to 25%;
MgO: 0% to 5%;
CaO: 0% to 10%;
SrO: 0% to 10%;
BaO: 0% to 10%;
$Li_2O$: 0% to 10%;
$Na_2O$: 0% to 5%;
$K_2O$: 0% to 5%;
$Al_2O_3$: 0% to 5%;
$Y_2O_3$: 0% to 10%;
$TiO_2$: 15% to 40%;
$WO_3$: 0% to 5%;
$Nb_2O_5$: 1% to 10%;
$La_2O_3$: 1% to 25%;
$ZrO_2$: 1% to 10%;

ZnO: 0% to 5%;
$Gd_2O_3$: 0% to 10%; and
$Sb_2O_3 + SnO_2$: 0% to 5%.

Glass is preferable because glass is usually larger in refractive index than resins.

[Optical material]

The optical material according to the present invention is manufactured by shaping the above composition into a plate-like shape and putting its surface state (described later) into a particular state.

There is no limitation on the method for shaping the optical material into a plate-like shape. For example, a common method such as extrusion molding or press forming can be used for resins and a common method such as a floating method, a fusion method, or a roll-out method can be used for glass.

The thickness of the optical material is 1.1 mm or less, preferably in a range of 0.1 mm to 1.0 mm, particularly preferably 0.3 mm to 0.7 mm Since the thickness of the optical material is in this range, a light guide plate using the optical material develops both of thickness reduction and reduction of deviation of a light guiding position.

[Surface shape]

The optical material according to the present invention has a small surface undulation and hence can prevent reduction in the contrast and resolution of an image due to deviation of the reflection angle of light that travels through a light guide plate while being subjected to total reflection.

In the present invention, waviness is employed as an index representing the degree of surface undulation. The waviness is an average of slopes (in degrees) of surface local undulation in a certain region.

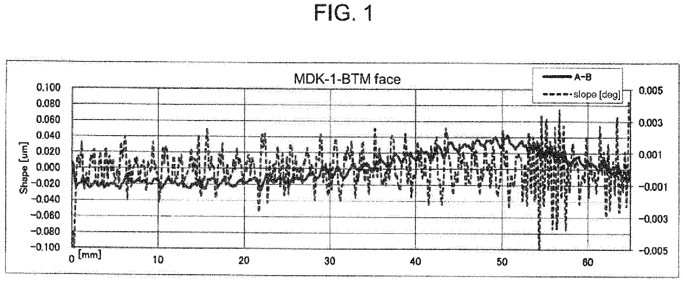

FIG. 1 shows measurement data of a surface state for measurement of waviness in Example 1. Waviness is calculated from angular variations of very fine surface projections and recesses.

A specific example of a calculation method will be described in Examples.

The waviness of the optical material according to the present invention is less than 50 ($\times$ $10^{-4}$ degrees), preferably less than or equal to 20 (x $10^{-4}$ degrees), particularly preferably 1.0 to 10 (x $10^{-4}$ degrees).

It is preferable that the root mean square roughness (Rq) is 2.0 nm or less, since luminance reduction due to light scattering can be prevented.

Preferable specific examples of a technique for controlling the surface state within the above range include performing precision polishing using an abrasive having a very small grain diameter while measuring the W value. A cerium abrasive, colloidal silica, etc. are preferable as an abrasive. However, a method employed in the present invention is not limited to this method. For example, it is possible to use a technique of burying or covering surface undulation of the optical material using a material having a similar refractive index.

EXAMPLES

Although the present invention will be described below with Examples and Comparative Examples, it is possible to modify the embodiment appropriately as long as the advantages of the present invention can be attained.

<Shapes of samples for evaluation>

Disc-shaped glass plates having a diameter of 150 mm (6 inches) and thicknesses shown in Table 1 were used.

<Measuring method>

[Refractive index]

A refractive index with respect to the helium d line was measured using a refractive index meter (product name KRP-2000 manufactured by Kalnew Optical Industrial Co., Ltd.)

[Thickness]

A thickness (d) of a sample end portion was measured using vernier calipers.

[Waviness (W)]

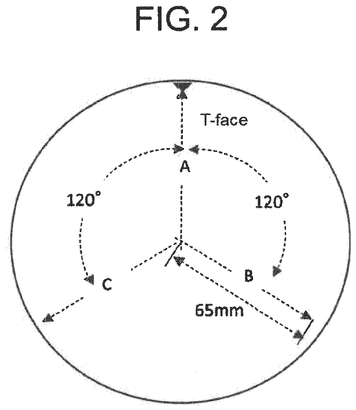

Waviness (converted into degrees) was measured by measuring a local variation of the undulation height of a substrate surface using Surfcom 579A manufactured by Tokyo Seimitsu Co., Ltd. under conditions of WCA and cutoff: 0.8 to 8 mm and then performing differentiation processing. As shown in FIG. 2, measurements were carried out along three straight lines (over 65 mm from the center to the outer edge) that divide a sample equally into three parts.
A calculation method is as follows:

$$Wx \text{ (waviness at a position x)} = 180 * \arctan(0.001 * ((\text{maximum undulation height}) - (\text{minimum undulation height}))/(\text{distance between maximum undulation height position and minimum undulation height position}))/\pi.$$

W = (average of Wx over 0 to 65 mm).
Here, the unit of the maximum undulation height and the minimum undulation height is $\mu$m, and the unit of the distance between maximum undulation height position and minimum undulation height position is mm. A final result of an average of results obtained in the ranges of the three straight lines is shown in Table 1.

[Evaluation of light guiding characteristics]

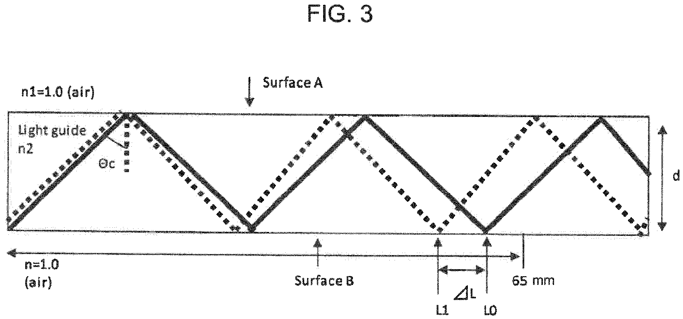

The light guiding characteristics were evaluated by determining, by a simulation, a deviation ($\Delta$L) between light positions of ideal reflection (with no undulation) and reflections with undulations.
More specifically, as shown in FIG. 3, when a direct incident light traveled through an optical material, assuming that the light conducted ideal reflection (i.e., reflection in the optical material without undulation), a reference point was defined as a point at which total reflection occurred and the light guiding distance was closest to 65 mm. The distance from the incident edge to the reference point was defined as L0. The number of reflection until the light was reflected at the reference point was defined as N, including the reflection at the reference point.
Then, a light guiding distance L1 of a direct incident light having conducted total reflection for the N time under a condition that surface A had undulation and surface B had no undulation, as in Examples etc., was measured. Then, a deviation $\Delta$L between light reaching points was obtained with an equation $\Delta$L = |L0 - L1|. A condition in which undulation existed in only one surface was employed to clarify the difference.

Conditions:

Reflection angle: Critical angle $\theta$c under the conditions shown in Table 1 ($\theta$c = arcsin(n2/n1))
Refractive index of air: n1 = 1.0
Refractive index n2 of optical material: Condition shown in Table 1
Thickness d of optical material: Condition shown in Table 1
Reference light guiding distance: 65 mm

<Deviation $\Delta$L from distance under theoretical conditions>

A: $\Delta$L $\leq$ 3.0 $\mu$m
B: 3.0 $\mu$m < $\Delta$L < 4.0 $\mu$m
C: 4.0 $\mu$m $\leq$ $\Delta$L $\leq$ 10.0 $\mu$m
D: 10.0 $\mu$m < $\Delta$L

The evaluation results A to C were regarded as acceptable and the evaluation result D was regarded as not acceptable.

<Critical angle $\theta$c>

A: $\theta$c $\leq$ 30°

B: 30° < θc < 35°
C: 35° ≤ θc ≤ 40°
D: 40° < θc

The evaluation results A to C were regarded as acceptable and the evaluation result D was regarded as not acceptable.

<Number N of times of reflection>

A: 90 ≤ N
B: 60 ≤ N < 90
C: 45 ≤ N < 60
D: N < 45

The evaluation results A to C were regarded as acceptable and the evaluation result D was regarded as not acceptable.

A glass plate having a composition shown in Table 1, a width of 400 mm, and a thickness of 1 mm was manufactured by a glass melt forming method and a disc having a radius of 152 mm was cut out from a center portion of this plate using a glass cutter.

Then the disc was ground and polished using a double-sided polishing machine (16B-N/F manufactured by Hamai Industries Ltd.) until the thickness was reduced to 0.507 mm. The disc was thereafter subjected to chamfering and the radius was adjusted to 150 mm.

Finally, the disc was subjected to double-sided precision polishing using a cerium abrasive until the waviness was adjusted to a value shown in Table 1. A sample for evaluation having a thickness of 0.500 mm was produced. Evaluation results are shown in Table 1.

[Examples 2 to 8 and Comparative Examples 1 to 3]

Samples for evaluation were produced by the same operation as in Example 1 except that the conditions were changed as shown in Table 1.

As for Examples 3 and 4 and Comparative Examples 1 and 2, the polishing conditions were changed so that the polishing rates in the final double-sided precision polishing in Examples 3 and 4 and Comparative Example 1 became higher than in Example 1 by 10%, 20%, and 40%, respectively. Evaluation results are shown in Table 1.

[Table 1]

|  | Composition | Refractive index (n2) | Thickness (mm) | Waviness (degrees) | Evaluation | | |
|---|---|---|---|---|---|---|---|
|  |  |  |  |  | $\Delta L$ ($\mu m$) | Critical angle ($\theta c$) | Number of times of reflection (N) |
| Ex. 1 | 1 | 1.79 | 0.5 | $8.3 \times 10^{-4}$ | 2.0 (A) | 34.0 (B) | 96 (A) |
| Ex. 2 | 2 | 1.78 | 0.5 | $8.3 \times 10^{-4}$ | 2.0 (A) | 34.2 (B) | 95 (A) |
| Ex. 3 | 1 | 1.79 | 0.5 | $13.3 \times 10^{-4}$ | 3.2 (B) | 34.0 (B) | 96 (A) |
| Ex. 4 | 1 | 1.79 | 0.5 | $16.7 \times 10^{-4}$ | 4.1 (C) | 34.0 (B) | 96 (A) |
| Ex. 5 | 3 | 2.09 | 0.5 | $8.3 \times 10^{-4}$ | 2.2 (A) | 28.5 (A) | 119 (A) |
| Ex. 6 | 4 | 1.7 | 0.5 | $8.3 \times 10^{-4}$ | 2.2 (A) | 36.0 (C) | 89 (B) |

(continued)

| | Composition | Refractive index (n2) | Thickness (mm) | Waviness (degrees) | Evaluation | | |
|---|---|---|---|---|---|---|---|
| | | | | | $\Delta L$ ($\mu$m) | Critical angle ($\theta c$) | Number of times of reflection (N) |
| Ex. 7 | 1 | 1.79 | 1 | $8.3 \times 10^{-4}$ | 1.0 (A) | 34.0 (B) | 48 (C) |
| Ex. 8 | 1 | 1.79 | 0.2 | $8.3 \times 10^{-4}$ | 5.0 (C) | 34.0 (B) | 241 (A) |
| Comp. Ex. 1 | 1 | 1.79 | 0.5 | $50 \times 10^{-4}$ | 12.2 (D) | 34.0 (B) | 96 (A) |
| Comp. Ex. 2 | 5 | 1.51 | 0.5 | $8.3 \times 10^{-4}$ | 1.9 (A) | 41.5 (D) | 73 (B) |
| Comp. Ex. 3 | 1 | 1.79 | 1.2 | $8.3 \times 10^{-4}$ | 2.0 (A) | 34.0 (B) | 40 (D) |

(Mass%)

- Glass composition 1: $B_2O_3$ (19.5), $SiO_2$ (5.3), $La_2O_3$ (26.4), $Gd_2O_3$ (13.3), ZnO (16.7), $Li_2O$ (1.3), $ZrO_2$ (1.8), $Ta_2O_5$ (9.8), $WO_3$ (6.0)

- Glass composition 2: $Bi_2O_3$ (20.8), $SiO_2$ (4.5), $La_2O_3$ (25.4), $Gd_2O_3$ (17.5), ZnO (15.0), $Li_2O$ (1.7), $ZrO_2$ (1.8), $Ta_2O_5$ (9.9), $WO_3$ (3.4)

- Glass composition 3: $Bi_2O_3$ (68.9), $B_2O_3$ (7.8), $TeO_2$ (12.4), $P_2O_5$ (6.3), ZnO (1.8), $TiO_2$ (2.8)

- Glass composition 4: $B_2O_3$ (42.7), $Li_2O$ (2.5), ZnO (9.7), $La_2O_3$ (34.0), $Gd_2O_3$ (11.0), $Sb_2O_3$ (0.1)

- Glass composition 5: $P_2O_5$ (71.0), $B_2O_3$ (2.0), $K_2O$ (13.0)

Measurement results of TTV and Rq in Example 1 and Comparative Example 1 are shown in Table 2. These results show that reflection angle deviations may become large if the waviness is not within the range prescribed in the present invention even when TTV and Rq values are respectively the same.

[Table 2]

| | Waviness (degrees) | TTV ($\mu$m) | Rq (nm) | Evaluation |
|---|---|---|---|---|
| | | | | $\Delta L$ ($\mu$m) |
| Ex. 1 | $8.3 \times 10^{-4}$ | 0.1 | 2.0 | 2.0 (A) |
| Comp. Ex. 1 | $50 \times 10^{-4}$ | 0.1 | 2.0 | 12.2 (D) |

## Claims

1. An optical material for a light guide plate, having a refractive index of 1.70 or more, a thickness of 1.1 mm or less, and a waviness of a surface of less than $50 \times 10^{-4}$ degrees.

2. The optical material for a light guide plate according to claim 1, wherein the waviness is from $1.0 \times 10^{-4}$ to $10 \times 10^{-4}$ degrees.

3. The optical material for a light guide plate according to claim 1 or 2, comprising a glass.

4. The optical material for a light guide plate according to claim 3, wherein the glass comprising, as represented by mol% based on oxides:

$SiO_2$: 0% to 70%;
$B_2O_3$: 0% to 50%;
MgO: 0% to 25%;
CaO: 0% to 25%;
SrO: 0% to 25%;
BaO: 0% to 35%;
$Li_2O$: 0% to 35%;
$Na_2O$: 0% to 35%;
$K_2O$: 0% to 35%;
$Al_2O_3$: 0% to 10%;
$Y_2O_3$: 0% to 10%;
$TiO_2$: 0% to 50%;
$WO_3$: 0% to 20%;
$Nb_2O_5$: 0% to 35%;
$La_2O_3$: 0% to 50%;
$ZrO_2$: 0% to 20%;
ZnO: 0% to 35%;
$Gd_2O_3$: 0% to 30%; and
$Sb_2O_3 + SnO_2$: 0% to 10%.

5. The optical material for a light guide plate according to any one of claims 1 to 4, wherein the thickness is from 0.3 to 0.7 mm.

6. A light guide plate comprising the optical material for a light guide plate according to any one of claims 1 to 5.

FIG. 1

# FIG. 2

# FIG. 3

Europäisches
Patentamt

European
Patent Office

Office européen
des brevets

# EUROPEAN SEARCH REPORT

Application Number

EP 19 19 8543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/217317 A1 (YANASE TOMOKI [JP] ET AL) 2 August 2018 (2018-08-02) * paragraph [0025] - paragraph [0057]; examples 1-3; table 1 * ----- | 1-6 | INV. C03C3/066 C03C3/068 C03C3/14 C03C3/19 B24B1/00 C03C3/062 |
| X | US 2012/025245 A1 (NAKAMURA NOBUHIRO [JP] ET AL) 2 February 2012 (2012-02-02) * paragraphs [0029], [0165], [0241] - paragraph [0245]; claim 1 * ----- | 1-5 | |
| T | WO 2015/083713 A1 (ASAHI GLASS CO LTD [JP]) 11 June 2015 (2015-06-11) * the whole document * ----- | | |

TECHNICAL FIELDS SEARCHED (IPC)

C03C
B24D
B24B

The present search report has been drawn up for all claims

| Place of search | Date of completion of the search | Examiner |
|---|---|---|
| Munich | 23 March 2020 | Cristescu, Ioana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 8543

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2020

| Patent document cited in search report | Publication date | Patent family member(s) | Publication date |
|---|---|---|---|
| US 2018217317 A1 | 02-08-2018 | CN 107850725 A<br>EP 3330754 A1<br>JP 2017032673 A<br>KR 20180033577 A<br>US 2018217317 A1<br>WO 2017018375 A1 | 27-03-2018<br>06-06-2018<br>09-02-2017<br>03-04-2018<br>02-08-2018<br>02-02-2017 |
| US 2012025245 A1 | 02-02-2012 | CN 102293054 A<br>EP 2384086 A1<br>JP 5824807 B2<br>JP WO2010084923 A1<br>KR 20110116142 A<br>TW 201041205 A<br>US 2012025245 A1<br>WO 2010084923 A1 | 21-12-2011<br>02-11-2011<br>02-12-2015<br>19-07-2012<br>25-10-2011<br>16-11-2010<br>02-02-2012<br>29-07-2010 |
| WO 2015083713 A1 | 11-06-2015 | CN 105793207 A<br>JP 2017030976 A<br>KR 20160093605 A<br>TW 201538449 A<br>WO 2015083713 A1 | 20-07-2016<br>09-02-2017<br>08-08-2016<br>16-10-2015<br>11-06-2015 |

**EP 3 647 283 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018135193 A1
- WO 2016181812 A1
- WO 2017086322 A1
- WO 2017090645 A1